# EUROPÄISCHE PATENTSCHRIFT

(11) **EP 0 974 507 B1**
(45) Veröffentlichungstag und Bekanntmachung des Hinweises auf die Patenterteilung: **29.09.2004**
(21) Anmeldenummer: 99113012.1
(22) Anmeldetag: 06.07.1999
(51) Int. Cl.: B62D 6/00

(54) **Lenksystem für ein Fahrzeug**
Vehicular steering system
Systèmede direction pour véhicule

(30) Priorität: 23.07.1998 DE 19833189
(43) Veröffentlichungstag der Anmeldung: 26.01.2000
(73) Patentinhaber: Bayerische Motoren Werke Aktiengesellschaft, 80788 München (DE)
(72) Erfinder: Konigorski, Ulrich, Prof. Dr. Ing., 38678 Clausthal-Zellerfeld (DE)
(74) Vertreter: Wesel-Mair, Julia

(56) Entgegenhaltungen:
- EP-A- 0 416 266
- EP-A- 0 683 086
- EP-A- 0 775 624
- DE-A- 3 930 445
- DE-A- 4 410 361

## Beschreibung

Die Erfindung betrifft ein Lenksystem für ein Fahrzeug gemäß dem Oberbegriff des Anspruchs 1.

Es sind Lenksysteme bekannt, bei denen eine Lenkbedieneinrichtung von der die Kraft auf die Räder ausübenden Lenkeinrichtung mechanisch entkoppelt ist. Eine solche Vorrichtung besitzt beispielsweise den Vorteil, daß aufgrund von Fahrstabilitäts- und -dynamikkriterien notwendig werdende Lenkkorrekturen einfacher berücksichtigt und das Lenkverhalten entsprechend einer jeweiligen Fahrsituation angepaßt werden können. Darüber hinaus ergibt sich eine einfachere Konstruktion, und die Lenkbedieneinheit läßt sich variabler im Fahrzeug anordnen.

Bekannt sind insbesondere solche Lenksysteme, bei denen an der Lenkbedieneinheit ein Lenkwinkel abgegriffen und über eine Steuereinheit an den Rädern eingestellt wird (vgl. DE 39 30 445 A1). Zudem wird die auf die Räder einwirkende Gegenkraft aus der Rad-Straße-Wirkung ermittelt und an die Lenkbedieneinheit zurückgekoppelt, so daß der Fahrer über dieses rückgekoppelte Moment ein einem mechanischen Fahrgefühl entsprechendes Fahrgefühl vermittelt bekommt.

Solche Lenksysteme haben jedoch den Nachteil, daß es - insbesondere beim Loslassen der Lenkbedieneinheit durch den Bediener - aufgrund der Haftreibung im Lenkgetriebe zu Lenksschwingungen kommen kann.

Aus der EP 0 775 624 A2 ist ein Lenksystem bekannt, bei dem an einer Lenkbedieneinheit ein Bedienmoment abgreifbar ist, welches von einer Steuereinheit in einen Steuerstrom umgesetzt wird. Mit diesem Steuerstrom wird wiederum ein die lenkbaren Räder betätigender Aktuator beaufschlagt. Über einen Sensor wird zusätzlich der Winkel des Radeinschlages ermittelt. Ein entsprechendes Signal wird von der Steuereinrichtung zusammen mit anderen Signalen verarbeitet und ein zugehöriges Rückstellmoment an die Bedieneinheit zurückgegeben. Gegen dieses Rückstellmoment betätigt der Fahrzeugbediener wiederum die Lenkbedieneinheit.

Aufgabe der Erfindung ist es, ein einfaches Lenksystem der vorgenannten Art anzugeben, mit welchem auf wirkungsvolle Art ein gutes Fahrgefühl ver mittelt werden kann, ohne daß es aufgrund einer Haftreibung im Lenksystem zu Schwingungen kommen kann.

Diese Aufgabe wird durch die im Anspruch 1 genannten Merkmale gelöst.

Demgemäß ist das erfindungsgemäße Lenksystem für ein Fahrzeug derart aufgebaut, daß prinzipiell eine Momentenvorgabe an einem Lenkbedienelement ermittelt und ein entsprechender Lenkwinkel-Fahrerwunsch an dieses zurückgekoppelt wird. Ein von der Steuervorrichtung errechnetes Lenkmoment wird an die Räder gegeben. Daraufhin stellen sich die Räder automatisch so ein, daß sich dieses Moment und das von der Rad-Straße-Wirkung herrührende Gegenmoment gerade kompensieren (Momentengleichgewicht). In diesem Fall entspricht das von der Steuereinheit vorgegebene Soll-Lenkmoment demjenigen Moment, das von der Radseitenkraft erzeugt wird.

In diesem Zusammenhang wird besonders darauf hingewiesen, daß die Begriffe "Lenkmomente" und "Lenkkräfte" vorliegend formal gleichzusetzen sind.

In einer Rückkopplungsschleife wird zunächst der sich tatsächlich einstellende (Gleichgewichts-)Lenkwinkel der lenkbaren Räder ermittelt und an die Steuereinheit weitergegeben. Diese berechnet einen zugehörigen Lenkwinkel-Fahrerwunsch an der Lenkbedieneinheit, welcher über eine Rückmeldeeinheit eingestellt wird. Bei einer Implementierung des erfindungsgemäßen Lenksystems meint der Fahrer weiterhin, dass er mit seinem Lenkrad, d.h. seiner Lenkbedieneinrichtung einen Lenkwinkel vorgibt bzw. einen solchen wünscht. Um zum Ausdruck zu bringen, dass hier jedoch vom Fahrer kein Wunsch-Lenkwinkel vorgegeben wird, sondern ein Bedienmoment, wird in der vorliegenden Beschreibung der entsprechende an der Lenkbedieneinrichtung eingestellte Lenkwinkel als "Lenkwinkel-Fahrerwunsch" bezeichnet. Insgesamt wird also im ersten Zweig der Regelung an den Rädern ein vorgegebenes Moment eingestellt. Im zweiten Zweig der Regelung wird der erfaßte Lenkwinkel überarbeitet in Form des Lenkwinkel-Fahrerwunsches an die Lenkbedieneinheit zurückübermittelt.

Mit dieser einfachen Steuerung ist ein ein wirkungsvolles und ein gutes Fahrgefühl vermittelndes Lenksystem angegeben, bei dem keine Schwingeffekte aufgrund einer Haftreibung im Lenksystem auftreten.

Gemäß einer vorteilhaften Ausführungsform des Lenksystems wird das Moment an den Rädern in einem Regelvorgang eingestellt. Dazu wird das von einem Momentensensor an den Rädern tatsächliche anliegende Ist-Lenkmoment erfaßt und mit dem Soll-Lenkmoment verglichen. Wird eine Abweichung beider Werte festgestellt, betätigt die Lenkeinrichtung die Räder derart, daß das Ist-Lenkmoment mit dem geforderten Soll-Lenkmoment zur Übereinstimmung kommt.

Analog ist eine bevorzugte Ausführungsform der Erfindung dadurch gekennzeichnet, daß der Lenkwinkel-Fahrerwunsch an der Lenkbedieneinrichtung in einer weiteren Regelung eingestellt wird. Dazu erfaßt ein Drehwinkelsensor den an der Lenkbedieneinrichtung anliegenden Ist-Drehwinkel und vergleicht ihn mit dem von der Steuereinheit berechneten Lenkwinkel-Fahrerwunsch. Wird eine Abweichung beider Werte festgestellt, so wird die Lenkbedieneinrichtung derart gesteuert, daß der Ist-Drehwinkel mit dem Lenkwinkel-Fahrerwunsch zur Übereinstimmung kommt.

Die zur Betätigung der Räder oder der Lenkbedieneinrichtung vorgesehenen Stelleinrichtungen können elektrisch, hydraulisch oder pneumatisch oder in einer anderen bekannten Weise ausgebildet sein.

Da die Lenksysteme im allgemeinen hochgradig sicherheitsrelevant sind, werden vorzugsweise alle von dem Lenksystem umfaßten Hardware- und Softwareelemente redundant vorgesehen.

Die lenkbaren Räder können über ein Radgestänge miteinander verbunden sein. Alternativ kann jedes Rad separat lenkbar sein.

Gemäß einer vorzugsweisen Ausführungsform der Erfindung ist die Verbindung zwischen der Lenkbedieneinrichtung und dem Aktuator zur Einstellung des Lenkwinkel-Fahrerwunsches an der Lenkbedieneinrichtung elastisch ausgelegt; beispielsweise mittels einer Drehfeder.

Eine weitere vorteilhafte Ausführungsform ist dadurch gekennzeichnet, daß die Steuereinrichtung das Soll-Lenkmoment und/oder den Lenkwinkel-Fahrerwunsch derart berechnet, daß eine virtuelle Elastizität bzw. Steifigkeit zwischen der Fahrzeugbedienervorgabe und der Rad-Straße-Wirkung entsteht. Dies dient der Komfortverbesserung und der Verbesserung des Fahrverhaltens sowie der Erhöhung der Fahrstabilität.

Ein Vorteil einer mechanischen Entkoppelung von Lenkbedieneinrichtung und Lenkeinrichtung besteht in der einfachen Kompensation von verschiedenen Fahrstabilitäts- und -dynamikeinflüssen. Dazu kann die Steuereinheit derart ausgebildet sein, daß weitere Größen, wie Fahrzeuggeschwindigkeit, Gierrate, Schlupfwinkel, Straßenzustand, Querbeschleunigung oder andere Kenndaten ausgewertet und bei der Bildung der Soll-Lenkmomente und/oder der Werte für den Lenkwinkel-Fahrerwunsch berücksichtigt werden.

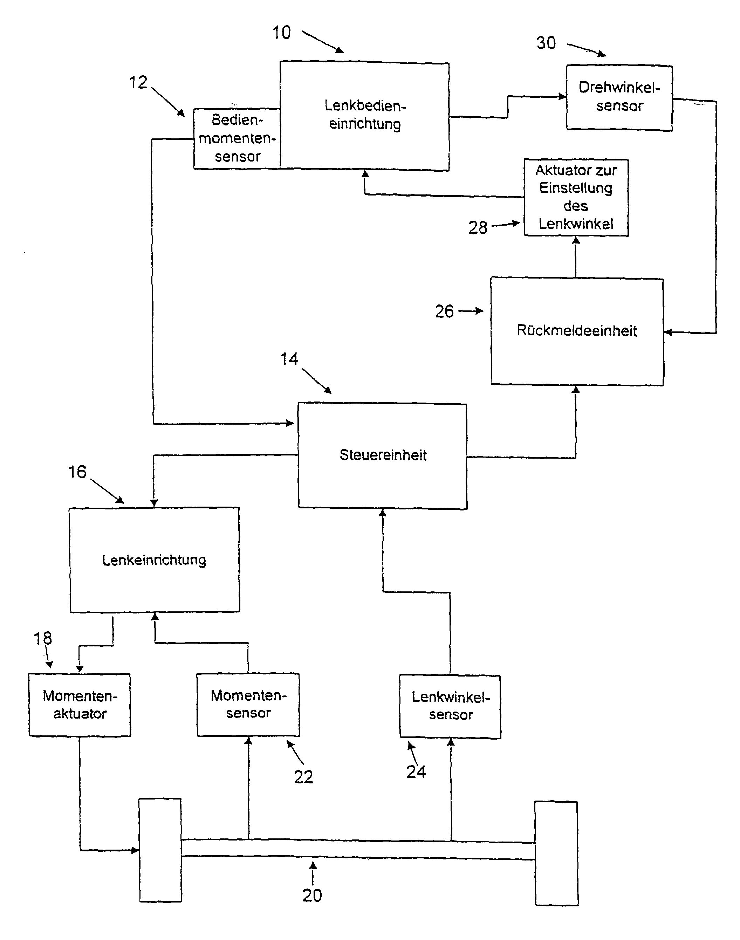

Die Erfindung wird nachfolgend anhand eines Ausführungsbeispiels beschrieben. Die einzige Zeichnung zeigt eine schematische Logikschaltskizze bei einer Ausführungsform der Erfindung.

In der einzigen Figur ist eine von einem Fahrer zu bedienende Lenkbedieneinrichtung 10 (z.B. Lenkrad) vorgesehen, der ein Bedienmomentensensor 12 zugeordnet ist. Der Bedienmomentensensor 12 erfaßt die vom Fahrzeugbediener an der Lenkbedieneinrichtung 10 vorgegebene Bedienkraft oder das Bedienmoment und übermittelt diese bzw. dieses an eine Steuereinheit 14. Die Steuereinheit 14 berechnet zumindest aufgrund der Bedienmomentenvorgabe einen Wert für das Soll-Lenkmoment, welches an den Rädern eingestellt werden soll. Wie oben bereits erwähnt erfassen die Begriffe Solloder Istmomente" auch Soll- oder Istkräfte".

Im vorliegenden Ausführungsbeispiel nicht dargestellt können natürlich weitere Kenngrößen wie die Fahrzeuggeschwindigkeit, die Gierrate, der Schlupfwinkel, der Straßenzustand, die Querbeschleunigung o. ä. den Komfort, das Fahrverhalten und die Fahrstabilität beeinflussende Größen an die Steuereinheit 14 übermittelt werden, die das zu bestimmende Soll-Lenkmoment entsprechend vorgegebener Korrekturalgorithmen anpaßt.

Das so errechnete Soll-Lenkmoment wird an eine Lenkeinrichtung 16 übermittelt, die einen Momentenaktuator 18 beaufschlagt. Dieser bewegt die Räder 20 derart, daß das Soll-Lenkmoment an den Rädern 20 anliegt.

Im vorliegenden Fall sind zwei Räder über ein Lenkgestänge miteinander verbunden. Das Lenkgestänge wird - nicht dargestellt - über ein vom Momentenaktuator 18 angetriebenes Lenkgetriebe bewegt. Alternativ können die Räder auch einzeln angesprochen und betätigt werden. Es ist dann eine entsprechende Anzahl von Momentenaktuatoren vorzusehen.

Gleichzeitig wird das an den Rädern anliegende Ist-Lenkmoment von einem Momentensensor 22 erfaßt und an die Lenkeinrichtung 16 zurückübermittelt. Die Lenkeinrichtung 16 vergleicht die Soll-Lenkmomentenvorgabe und den Ist-Lenkmomentenwert und gibt ein derartiges Signal an den Momentenaktuator 18 ab, daß der Ist-Lenkmomentenwert möglichst schnell dem Soll-Lenkmomentenwert angeglichen wird. Insofern handelt es sich bei der Einheit Lenkeinrichtung 16, Momentenaktuator 18, Rad 20 und Momentensensor 22 um eine separate Regeleinheit.

Auf der anderen Seite wird in einer Rückkopplungsschleife zunächst der sich an den Rädern einstellende Lenkwinkel über einen Lenkwinkelsensor 24 ermittelt und an die Steuereinheit 14 übertragen. Die Steuereinheit 14 berechnet daraufhin einen korrespondierenden Lenkwinkel-Fahrerwunsch für die Lenkbedieneinrichtung 10 und übermittelt diesen an eine Rückmeldeeinheit 26.

Die Rückmeldeeinheit 26 beaufschlagt einen Aktuator 28 mit einem Signal zur Einstellung des Lenkwinkel-Fahrerwunsches an der Lenkbedieneinrichtung 10. Parallel erfaßt ein Drehwinkelsensor 30 den an der Lenkbedieneinrichtung 10 tatsächlich anliegenden Ist-Drehwinkel und übermittelt diesen an die Rückmeldeeinheit 26 zurück. Diese beaufschlagt nun den Aktuator 28 derart, daß der an der Lenkbedieneinrichtung 10 anliegende Ist-Drehwinkel auf den Lenkwinkel-Fahrerwunsch eingeregelt wird. Insofern handelt es sich bei der aus der Rückmeldeeinheit 26, dem Aktuator 28, der Lenkbedieneinrichtung 10 und dem Drehwinkelsensor 30 bestehenden Einheit ebenfalls um einen Regelkreis.

Durch die beschriebene Ausführungsform des Lenksystems wird das vom Bediener vorgegebene Bedienmoment bzw. dessen Bedienkraft gemessen und über das Steuergerät an die Räder übermittelt. Zur Vermittlung des Fahrgefühls wird anstatt der Gegenkraft der Rad-Straße-Wirkung der sich einstellende Radwinkel gemessen und ebenfalls über das Steuergerät an die Lenkbedieneinheit zurückübermittelt. Der Wirkungskreislauf stellt sich dabei folgendermaßen dar:

Der Bediener des Fahrzeugs gibt ein gewünschtes Lenkmoment bzw. eine gewünschte Lenkkraft an der Lenkbedieneinrichtung vor.
Das gewünschte Lenkmoment bzw. die gewünschte Lenkkraft wird vom Bedienmomentensensor 12 gemessen und an die Steuereinheit 14 übermittelt.
Diese berechnet aus dem vom Bediener gewünschten Lenkbedienmoment bzw. der gewünschten Lenkbedienkraft und anderen Fahrzeuggrößen, wie z. B. der Fahrzeuggeschwindigkeit etc., ein Soll-Lenkmoment und kommandiert diese an die Lenkeinrichtung 16 bzw. dem Momentenaktuator 18.
Insgesamt wird damit ein Moment an die Räder übermittelt, die sich derart einstellen, daß ein Gleichgewichtszustand zwischen diesem und dem von der Rad-Straße-Wirkung zurückkommenden Moment (Radseitenkraft) erreicht ist.
Der sich über das Kräftegleichgewicht mit der Rad-Straße-Wirkung einstellende Lenkwinkel wird durch den Lenkwinkelsensor 24 gemessen und an die Steuereinheit 14 übermittelt.
Die Steuereinheit 14 berechnet aus dem gemessenen Lenkwinkel und anderen Fahrzeuggrößen einen zugehörigen Lenkwinkel-Fahrerwunsch für die Lenkbedieneinrichtung 10 und gibt diesen an die mit der Lenkbedieneinrichtung 10 mechanisch wirkverbundenen Rückmeldeeinheit 26 bzw. Aktuator 28 aus.
Die Rückmeldeeinheit 26 bzw. der Aktuator 28 stellt den von der Steuereinheit 14 kommandierten Winkel der Bedieneinheit, d.h. den Lenkwinkel-Fahrerwunsch an der Lenkbedieneinrichtung 10 ein und vermittelt dem Fahrer so ein Fahrgefühl ähnlich einer servounterstützten mechanischen Lenkung.

Das vorgenannte Lenksystem entspricht einer Servolenkung und weist alle bekannten Vorteile gegenüber einer manuellen Lenkung auf Auch bei einer hydraulischen Servolenkung wird das vom Fahrer vorgegebene Lenkbedienmoment über einen Drehstab ermittelt und durch die Servounterstützung verstärkt auf die lenkbaren Räder aufgebracht.
Überdies entsteht kein Schwingungsproblem, da an den Rädern direkt ein Radmoment eingestellt wird, das eine im Radgestänge vorliegende Haftreibung bereits enthält. Insofern hat der Haftreibungsanteil keine Reaktionsbewegung zur Folge.
Insgesamt ist mit dem vorliegenden Lenksystem somit eine einfache Möglichkeit gegeben, eine mechanisch entkoppelte Lenkung mit gutem Fahrgefühl darzustellen, wobei keinerlei unerwünschte Schwingungen an der Lenkbedieneinrichtung entstehen.

## Patentansprüche

1. Lenksystem für ein Fahrzeug mit einer Lenkbedieneinrichtung (10), einem der Lenkbedieneinrichtung (10) zugeordneten Bedienmomentensensor (12), der das auf die Lenkbedieneinrichtung (10) ausgeübte Bedienmoment aufnimmt und ein entsprechendes Signal erzeugt, und einem Lenkwinkelsensor (24), der einen der Ausrichtung der lenkbaren Räder (20) entsprechenden Lenkwinkel erfaßt und ein entsprechendes Signal an eine Steuereinrichtung (14) liefert, die wiederum einen zugehörigen Lenkwinkel-Fahrerwunsch der Lenkbedieneinrichtung (10) ermittelt,
**dadurch gekennzeichnet,**
**dass** die Steuereinheit (14) derart ausgebildet ist, um das von dem Bedienmomentensensor (12) erzeugte Signal zu verarbeiten und ein zugeordnetes Soll-Lenkmoment oder eine zugeordnete Soll-Lenkkraft auszugeben, dass eine von der Lenkbedieneinrichtung (10) mechanisch entkoppelte Lenkeinrichtung (16) vorgesehen ist, die das Soll-Lenkmoment oder die Soll-Lenkkraft an den lenkbaren Rädern einstellt, und dass eine Rückmeldeeinheit (26) zur Einstellung des ermittelten Lenkwinkel-Fahrerwunsches an der Lenkbedieneinrichtung (10) vorgesehen ist.

2. Lenksystem nach Anspruch 1,
**dadurch gekennzeichnet, daß** die Lenkeinrichtung (16) einen Momenten- oder Kraftsensor (22) umfaßt, der das an den Rädern anliegende Ist-Lenkmoment oder die an den Rädern anliegende Ist-Lenkkraft erfaßt und ein entsprechendes Signal ausgibt, und daß die Lenkeinrichtung (16) zur Einregelung des Ist-Lenkmoments oder der Ist-Lenkkraft auf das Soll-Lenkmoment oder die Soll-Lenkkraft ausgebildet ist.

3. Lenksystem nach Anspruch 1 oder 2,
**dadurch gekennzeichnet, daß** die Rückmeldeeinheit (26) einen Drehwinkelsensor (30) umfaßt, der den an der Lenkbedieneinrichtung (10) anliegenden Ist-Drehwinkel erfaßt und ein entsprechendes Signal ausgibt, so daß die Rückmeldeeinheit (26) zur Einregelung des Ist-Drehwinkels auf den Lenkwinkel-Fahrerwunsch ausgebildet ist.

4. Lenksystem nach einem der vorhergehenden Ansprüche,
**dadurch gekennzeichnet, daß** elektrische, hydraulische oder pneumatische Stelleinrichtungen (18, 28) zur Betätigung der Räder (20) und/oder der Lenkbedieneinrichtung (10) vorgesehen sind.

5. Lenksystem nach einem der vorhergehenden Ansprüche,
**dadurch gekennzeichnet, daß** Sensoren (12, 22, 24, 30), Aktuatoren (18, 28), Stelleinrichtungen, Steuergeräte (14) und Signalleitungen redundant vorgesehen sind.

6. Lenksystem nach einem der vorhergehenden Ansprüche,
**dadurch gekennzeichnet, daß** die lenkbaren Räder (20) über ein Radgestänge miteinander verbunden sind.

7. Lenksystem nach einem der vorhergehenden Ansprüche 1 bis 5,
**dadurch gekennzeichnet, daß** jedes Rad separat lenkbar ist.

8. Lenksystem nach einem der vorhergehenden Ansprüche,
**dadurch gekennzeichnet, daß** die Verbindung zwischen der Lenkbedieneinrichtung (10) und dem Aktuator (28) zur Einstellung des Lenkwinkel-Fahrerwunsches elastisch ausgelegt ist.

9. Lenksystem nach einem der vorhergehenden Ansprüche,
**dadurch gekennzeichnet, daß** die Steuereinheit (14) das Soll-Lenkmoment und/oder den Lenkwinkel-Fahrerwunsch derart berechnet, daß eine virtuelle Elastizität zwischen der Bedienervorgabe und der Rad-Straße-Wirkung entsteht.

10. Lenksystem nach einem der vorhergehenden Ansprüche,
**dadurch gekennzeichnet, daß** die Steuereinheit (14) zur Auswertung von weiteren Größen wie der Fahrzeuggeschwindigkeit, der Gierrate, des Schlupfwinkels, des Straßenzustands und/oder der Querbeschleunigung ausgebildet ist und die entsprechenden Signale bei der Bildung des Soll-Lenkmoments und/oder des Lenkwinkel-Fahrerwunsches zur Sicherstellung der Fahrstabilität berücksichtigt.

## Claims

1. A steering system for a vehicle, comprising a steering operating device (10), a torque sensor (12) which is associated with the device (10), receives a torque exerted on the device (10) and generates a corresponding signal, and a steering-angle sensor (24) which detects a steering angle corresponding to the direction in which the steerable wheels (20) are turned and delivers a corresponding signal to a control device (14) which determines an appropriate steering angle for the device (10), as required by the driver,
**characterised in that**
the control unit (14) is constructed so as to process the signal generated by the sensor (12) and to output an associated set steering torque or an associated set steering force; a steering device (16) mechanically uncoupled on the steering control device (10) is provided and sets the set steering torque or the set steering force for the steerable wheels; and a response unit (26) is provided for setting the determined steering angle required by the driver for the steering operating device (10).

2. A steering system according to claim 1, **characterised in that** the steering device (16) comprises a torque or force sensor (22) which detects the actual steering torque or the actual steering force applied to the wheels and outputs a corresponding signal, and the steering device (16) is constructed to adjust the actual steering torque or actual steering force to the set steering torque or set steering force.

3. A steering system according to claim 1 or 2, **characterised in that** the response unit (26) comprises an angle of rotation sensor (30) which detects the actual angle of rotation applied to the steering operating device (10) and outputs a corresponding signal, so that the response unit (26) is adapted to adjust the actual angle of rotation to the steering angle required by the driver.

4. A steering system according to any of the preceding claims, **characterised in that** electric, hydraulic or pneumatic adjusting devices (18, 28) are provided for actuating the wheels (20) and/or for the steering operating device (10).

5. A steering system according to any of the preceding claims, **characterised in that** redundant sensors (12, 22, 24, 30), actuators (18, 28), adjusting devices, control units (14) and signal lines are provided.

6. A steering system according to any of the preceding claims, **characterised in that** the steerable wheels (20) are interconnected by a wheel linkage.

7. A steering system according to any of the preceding claims 1 to 5, **characterised in that** each wheel is separately steerable.

8. A steering system according to any of the preceding claims, **characterised in that** the connection between the steering device (10) and the actuator (28) is made elastic in order to adjust the steering angle as required by the driver.

9. A steering system according to any of the preceding claims, **characterised in that** the control unit (14), the set steering torque and/or the steering angle required by the driver are calculated so as to obtain virtual elasticity between the operator's instructions and the wheel-road effect.

10. A steering system according to any of the preceding claims, **characterised in that** the control unit (14) is adapted to evaluate other variables such as the speed of the vehicle, the yawing rate, the slip angle, the state of the road and/or the transverse acceleration and takes account of the corresponding signals when obtaining the set steering torque and/or the steering angle required by the driver, so as to ensure stability when driving.

## Revendications

1. Système de direction pour véhicule comportant un dispositif de manoeuvre de direction (10), un capteur de couple de direction (12) affecté au dispositif de manoeuvre de direction (10) qui reprend le couple de manoeuvre exercé sur le dispositif de manoeuvre de direction (10) et crée un signal correspondant, et un capteur d'angle de direction (24) qui acquiert un angle de direction correspondant à l'alignement des roues directrices (20) et fournit un signal correspondant à un dispositif de commande (14) qui acquiert à son tour un angle de direction souhaité par le conducteur du dispositif de manoeuvre de direction (10),
**caractérisé en ce que**
l'unité de commande (14), de façon à traiter le signal créé par le capteur de couple de manoeuvre (12) et fournir un couple de direction de consigne affecté ou une force de direction de consigne affectée, est constituée de manière telle qu'un dispositif de direction (16) mécaniquement découplé du dispositif de manoeuvre de direction (10) est prévu, qui applique le couple de direction de consigne ou la force de direction de consigne aux roues directrices et qu'une unité de réponse (26) est prévue pour le réglage de l'angle déterminé de direction souhaité par le conducteur du dispositif de manoeuvre de direction (10).

2. Système de direction selon la revendication 1,
**caractérisé en ce que**
le dispositif de direction (16) comprend un capteur de couple ou de force (22) qui acquiert le couple réel de direction appliqué aux roues ou la force réelle de direction appliquée aux roues et fournit un signal correspondant et que le dispositif de direction (16) est constitué pour réguler le couple réel de direction ou la force réelle de direction selon le couple de direction de consigne ou la force de direction de consigne.

3. Système de direction selon la revendication 1 ou 2,
**caractérisé en ce que**
l'unité de réponse (26) comprend un capteur d'angle de rotation (30) qui acquiert l'angle réel de rotation du dispositif de manoeuvre de direction (10) et donne un signal correspondant, si bien que l'unité de réponse (26) est constituée pour réguler l'angle réel de rotation selon l'angle de direction souhaité par le conducteur.

4. Système de direction selon l'une quelconque des revendications précédentes,
**caractérisé en ce que**
des dispositifs de réglage (18, 28) électriques, hydraulique ou pneumatiques sont prévus pour la manoeuvre des roues (20) et/ou du dispositif de manoeuvre de direction (10).

5. Système de direction selon l'une quelconque des revendications précédentes,
**caractérisé en ce que**
des capteurs (12, 22, 24, 30), des actionneurs (18, 28), des dispositifs de réglage, des appareils de commande (14) et des lignes de signaux sont prévus de manière redondante.

6. Système de direction selon l'une quelconque des revendications précédentes, **caractérisé en ce que** les roues directrices sont reliées ensemble au travers d'une tringlerie de roues.

7. Système de direction selon l'une quelconque des revendications 1 à 5,
**caractérisé en ce que**
chaque roue peut être dirigée séparément.

8. Système de direction selon l'une quelconque des revendications précédentes,
**caractérisé en ce que**
la liaison entre le dispositif de manoeuvre de direction (10) et l'actionneur (28) pour le réglage de l'angle de direction souhaité par le conducteur est constituée de manière élastique.

9. Système de direction selon l'une quelconque des revendications précédentes,
**caractérisé en ce que**
l'unité de commande (14) calcule le couple de direction de consigne et/ou l'angle de direction souhaité par le conducteur de manière telle qu'une élasticité virtuelle se crée entre la prescription du conducteur et l'effet roue - chaussée.

10. Système de direction selon l'une quelconque des revendications précédentes,
**caractérisé en ce que**
l'unité de commande (14) est constituée pour exploiter d'autres grandeurs telles la vitesse du véhicule automobile, le taux de lacet, l'angle de dérapage, l'état de la route et/ou l'accélération transversale et prend en compte les signaux correspondants lors de la formation du couple de direction de consigne et/ou l'angle de direction souhaité par le conducteur pour assurer la stabilité de circulation.
